# FASCICULE DE BREVET EUROPEEN

(11) **EP 0 662 285 B1**
(45) Date de publication et mention de la délivrance du brevet: **21.04.1999**
(21) Numéro de dépôt: 95400039.4
(22) Date de dépôt: 09.01.1995
(51) Int. Cl.: A23G 3/00

(54) **Confiserie grainée et procédé de fabrication de ladite confiserie**
Feinkörnige Süsswarenmasse und Herstellungsverfahren dafür
Fine-grained confectionary and process for making the same

(30) Priorité: 10.01.1994 FR 9400167
(43) Date de publication de la demande: 12.07.1995
(73) Titulaire: ROQUETTE FRERES, 62136 Lestrem (FR)
(72) Inventeur: Ribadeau-Dumas, Guillaume, F-59130 Lambersart (FR); Serpelloni, Michel, F-62660 Beuvry Les Bethune (FR)
(74) Mandataire: Boulinguiez, Didier

(56) Documents cités:
- EP-A- 0 094 292
- EP-A- 0 201 412
- EP-A- 0 533 334
- WO-A-91/07100
- GB-A- 1 583 573
- HOUGH, H.A. ; GRENBY, T. H. 'DEVELOPMENT IN SWEETENERS' 1987 , ELSEVIER APPLIED SCIENCE , LONDON CHAPTER 4, FARBY I. , * page 93 - page 97 *

## Description

La présente invention concerne une nouvelle confiserie grainée obtenue par emploi d'une quantité appropriée de maltitol ou de xylitol ainsi qu'un procédé de fabrication de ladite confiserie.

L'expression "confiserie grainée" désigne pour l'homme du métier une classe très particulière de produits de confiserie toujours considérés comme très délicats à produire. Ces produits sont partiellement cristallisés et présentent une structure physique complexe semblable à celle d'une dispersion fine mais parfois aussi à celle d'une mousse ou d'une émulsion.

Les confiseries grainées sont des dispersions fines du fait de la présence dans ces produits de très fins cristaux indécelables par les papilles gustatives de la langue et uniformément répartis dans un sirop sucré saturé comprenant les molécules solubles. Dans le cas de confiseries de sucre, les microcristaux en question sont composés de saccharose.

Il peut s'agir également de mousses en raison de la présence possible au sein de ces confiseries d'un réseau gazeux constitué en général de bulles d'air et conférant à ces articles une densité plus faible que celle de la très grande majorité des produits de confiserie. L'aération résulte d'opérations mécaniques spécifiques telles que l'étirage, le battage ou du choix d'ingrédients particuliers et appropriés, en particulier d'agents de foisonnement.

Enfin, ces confiseries peuvent être également des émulsions de type huile dans eau lorsque les produits contiennent des matières grasses. La phase grasse est alors dispersée sous forme de gouttelettes dans la phase aqueuse continue, et stabilisée en général par l'emploi d'émulsifiants.

Les confiseries du type de celles faisant l'objet de l'invention se caractérisent habituellement par une teneur en eau comprise entre 3 et 20 % et en général comprise entre 7 et 15 %, et par une texture courte et non filante, tendre et masticable sans être collante aux dents, et de plus légère et fondante. Contrairement aux chewing-gums, ces confiseries se dissolvent totalement sans laisser aucun résidu solide insoluble dans la bouche.

Concrétement, les confiseries grainées faisant l'objet de l'invention sont, sans que la liste ci-après soit limitative, des fondants, des guimauves grainées, des caramels tournés ou fudgés, des "toffees" cristallisés, des nougats, des "turrons", des pâtes à mâcher fudgées, des mousses aromatisées microcristallisées, des marzipans.

Ces articles comprennent parfois des agents de garniture comme des cacahuètes, des graines de sésame, des noix hâchées, des amandes, du riz soufflé, de la noix de coco râpée et dans d'autres cas, en tant qu'agents de fourrage, de la liqueur, des fourrages gras, des pâtes chocolatées. Il est à noter que ces articles peuvent par ailleurs être utilisés pour garnir ou couvrir d'autres produits de confiserie et de chocolaterie, tout comme des produits de biscuiterie.

Sont exclus par contre de la présente invention, les produits non grainés c'est à dire ne contenant pas d'édulcorant à l'état cristallisé comme par exemple la plupart des caramels mous, nougats ou nougatines tendres, des guimauves classiques tels que les têtes de négre, et les souris en mousse. Les chewing-gums seront également exclus, bien qu'ils comportent une phase cristalline, ainsi que les articles de confiserie ne contenant que des édulcorants à l'état cristallisé.

De nos jours, pour ce qui concerne la confiserie et les friandises, il semble que de nouvelles tendances fortes de consommation se dessinent. Les notions d'équilibre nutritionnel et d'hygiène de vie sont consciemment ou non prises en compte dans l'alimentation d'aujourd'hui. Bien que le plaisir du sucré reste toujours très vivace, bon nombre de consommateurs souhaitent éviter les problèmes liés à la consommation des sucres. C'est dans ce but que les confiseurs ont été amenés à développer des formulations sans sucre dans lesquelles les polyols appelés parfois sucre-alcools trouvent un juste emploi en raison de leur innocuité vis-à-vis des dents et de leur caloricité réduite par rapport au saccharose.

L'une des grandes difficultés auxquelles les formulateurs de confiseries sans sucre ne peuvent se soustraire est celle de réussir la fabrication de produits en tous points semblables aux produits traditionnels au point de s'y méprendre, ceci sans avoir à modifier ni à rendre plus complexe de façon importante les installations et les procédures en place dans les industries. Cela vaut également pour les confiseries objets de la présente invention.

On connaît divers documents témoignant de recherches actives dans ce sens. On peut citer en particulier :
- les brevets US 4.597.981 et US 4.963.359 relatifs tous deux à des confiseries tendres sans sucre contenant de la gélatine. Celles-ci sont non grainées en raison de l'absence d'emploi de molécules édulcorantes cristallisables.
- les brevets FR 2.522.936, US 4.323.588, et US 4.450.179 concernant des guimauves et des nougats sans sucre ou des articles tendres sans sucre comportant une coque et un centre, obtenus par association du sirop de maltose hydrogéné non cristallisable commercialisé par la demanderesse sous la marque LYCASIN^{R} et d'isomaltulose hydrogéné cristallisable. Il est seulement question de fabriquer des produits peu hygroscopiques ne s'affaissant pas à la conservation. Ceci étant, une texture courte ne peut être obtenue par emploi d'isomaltulose hydrogéné que si, comme l'a observé la demanderesse, la concentration en ce polyol est très élevée dans la confiserie. Ceci entraîne, outre l'augmentation du coût de la confiserie, la quasi-obligation, en raison du faible pouvoir sucrant de l'isomaltulose hydrogéné, d'utiliser des édulcorants intenses afin d'obtenir un goût sucré suffisant. Ainsi, les produits décrits dans ce document ne sont pas satisfaisants sur tous les plans.
- la demande de brevet français n° 2.338.651 dans laquelle est revendiquée un nouveau procédé de fabrication de bonbons à pâte molle présentant une structure cristalline. Ce procédé convient tout aussi bien à l'obtention de produits classiques avec sucre que des produits sans sucre. Le maltitol n'est pas cité expressément parmi les nombreux substituts possibles des sucres. Le xylitol est le polyol préféré en raison de la sensation de fraîcheur qu'il procure en bouche. Il est utilisé en tant que seul et unique substitut de mélanges de sucre et de sirop de glucose. La demanderesse a constaté que cela ne s'avère pas possible avec le maltitol et qu'avec le xylitol les produits obtenus ne sont pas totalement satisfaisants.
- la demande de brevet européen n° 377.278 ayant trait à une composition édulcorante diététique, dans laquelle sont décrites des pâtes à mâcher grainées, contenant essentiellement une combinaison de polydextrose et de xylitol. Ce dernier représente toujours au moins 38 % de la charge édulcorante, considérée à l'état sec. Il en est de même pour le polydextrose. Par ailleurs, les produits obtenus les plus intéressants du point de vue de leur texture et de leur stabilité nécessitent des températures de cuisson très élevées, voisines de 165°C, mais également la maturation de la masse cuite durant une nuit avant d'être travaillée à nouveau. On comprend qu'une mise en place industrielle d'un tel procédé discontinu s'avère très délicate tant d'un point de vue technique qu'économique.
- la demande de brevet européen n° 9.325 relative à des compositions anti-caries à base d'érythritol, notamment des fudges et des marshmallows. Les produits obtenus conformément aux exemples donnés présentent une fâcheuse tendance à cristalliser entièrement au cours du stockage et à acquérir une texture râpeuse et sableuse en bouche.
- les brevets EP 273.001 et US 4.911.935 décrivant des produits de type nougat, obtenus par addition à un "frappé" dépourvu de mannitol mais contenant obligatoirement une cellulose insoluble et une cellulose modifiée soluble, un sirop cuit composé d'un sirop de glucose hydrogéné et de mannitol. En fait, l'invention telle que décrite dans le brevet EP 273.001 repose sur l'utilisation de celluloses natives ou modifiées afin de conférer aux confiseries contenant un sirop de glucose hydrogéné une structure suffisamment visqueuse, de sorte que l'écoulement lors du stockage de celles-ci soit rendu difficile et que leur caractère collant désagréable soit atténué. Il n'est nullement question dans ce brevet de préparer des confiseries grainées présentant une texture courte et non filante. De plus les celluloses natives ou modifiées tendent malheureusement à générer par cuisson des goûts et des colorations parasitaires et un caractère râpeux en bouche, de sorte que la solution proposée est insatisfaisante.
- le brevet JP 55.-68256 revendiquant des bonbons tendres cristallisés comprenant du lactose et du fructose et éventuellement des polyols à une teneur maximale de 20 %. L'utilisation de maltitol n'est pas envisagée.
- le brevet FR 2.499.576 relatif à des cristaux anhydres de maltitol. Il y est décrit la possibilité de réaliser un fondant. En reproduisant le procédé donné à l'exemple 5 de ce brevet, on obtient, comme l'a constaté la demanderesse, une pâte aérée non cristallisée plutôt qu'un fondant. Le produit obtenu présente une texture sableuse, filante, particulièrement collante et très désagréable en bouche, ne correspondant aucunement aux caractéristiques souhaitées, énoncées plus haut et traditionnellement retrouvées pour de véritables fondants. De plus, la confiserie ainsi obtenue évolue après quelques semaines, au point de n'être plus consommable, du fait semble-t-il d'une cristallisation incontrôlée et tardive du maltitol au sein de celle-ci en cristaux grossiers, décelables par les papilles gustatives de la bouche.Cette instabilité rend le produit non commercialisable.

La demande de brevet international WO 91/07100 décrit un sucre cuit ("hard candy") dont l'édulcorant contient 30 à 70% en poids de xylitol et 70 à 30% en poids de sorbital, maltitol, isomalt, lactitol ou de leurs mélanges, et dont la teneur en eau n'excède pas 3% en poids. Il ne s'agit pas de confiseries grainées ayant une texture tendre.

Ainsi, il n'existe donc pas à l'heure actuelle de solutions techniquement ou économiquement viables permettant la fabrication de confiseries grainées, présentant les caractéristiques qualitatives énoncées plus haut.

Fort de ce constat, la demanderesse s'est attachée à remédier à cette carence tout en se donnant comme objectif essentiel celui d'améliorer les qualités sensorielles et texturales de telles confiseries au point de ressembler en tous points aux produits existants à base de sucre. La demanderesse s'est également attachée à réduire au maximum les modifications nécessaires, sur les lignes de fabrication conventionnelles, pour préparer lesdites confiseries sans sucre.

C'est après de nombreux essais que la Demanderesse a eu le mérite de constater que de façon surprenante et inattendue, il n'était possible de préparer des confiseries grainées au maltitol ou au xylitol, qui soient d'excellente qualité texturale et particulièrement stables au cours du temps, que si celles-ci contenaient de 50 à 93 % de maltitol ou de xylitol par rapport à la charge édulcorante totale, et que si l'un ou l'autre de ces deux polyols, présent au moins partiellement à l'état cristallisé au sein de la confiserie, l'était essentiellement sous forme de cristaux de taille inférieure à 60 microns, de préférence inférieure à 40 microns et plus préférentiellement encore inférieure à 20 microns.

L'invention a donc pour objet une confiserie grainée sans sucre, comportant du maltitol ou du xylitol, caractérisée en ce que le maltitol ou le xylitol constituent de 50 à 93 % de la charge édulcorante et en ce que le maltitol ou le xylitol présents à l'état cristallisé le sont essentiellement, et de préférence à hauteur d'au moins 90 %, sous forme de cristaux de taille inférieure à 60 microns.

La demanderesse a constaté qu'il y avait une analogie de comportement entre le xylitol et le maltitol et que si les cristaux contenus dans la confiserie ont une forme en aiguilles, c'est à dire par exemple ont une longueur de 120 microns et une section de 35 microns, alors la confiserie a tendance à évoluer rapidement et à durcir de façon excessive. Ceci n'est pas le cas lorsqu'elle contient des cristaux, de préférence de forme parallélipipédique, de taille inférieure à 60 microns. Dans ce cas, les confiseries grainées sont stables pendant plusieurs mois. Les cristaux ont alors une pureté en maltitol ou en xylitol élevée, dépassant 95 % et le plus souvent 98 %, voire 99 %.

La demanderesse a constaté de plus que lorsque la teneur en l'un ou l'autre de ces deux polyols est faible dans la confiserie c'est à dire quand elle est inférieure à 50 % par rapport à la charge édulcorante considérée à l'état sec, on obtient toujours une texture longue et filante et un produit ayant tendance à coller au papier d'emballage.

A l'inverse, lorsque cette teneur est forte et dépasse 93 % de la charge édulcorante totale de la confiserie, il a été vérifié qu'un grainage complet des confiseries s'observe toujours au cours du temps. Ceci est le cas même lorsque ces polyols sont cristallisés au sein de la confiserie sous forme de cristaux de taille inférieure à 60 microns. On obtient alors un produit cassant et très sableux en bouche. Pour des concentrations très élevées en maltitol ou en xylitol, une masse très fluide après cuisson est obtenue. Cela est d'autant plus vrai avec le xylitol. Il devient alors très difficile de travailler sur machine cette masse cuite. Il convient pour pallier ce problème d'augmenter les températures de cuisson ou bien d'ajouter des agents viscosifiants tels des polysaccharides naturels ou de synthèse. Ceci n'est pas avantageux et il est pour cela préférable de ne jamais dépasser la teneur de 93 %.

Il est surprenant de constater que, bien que le maltitol et le xylitol n'aient pas la même solubilité dans l'eau, il soit nécessaire de retenir pour ces deux polyols des concentrations très voisines, calculées par rapport à la charge édulcorante totale sèche.

Il est donc essentiel que la teneur, soit en maltitol, soit en xylitol ne soit ni trop faible ni trop élevée afin que la texture de la confiserie grainée soit correcte dès l'origine et par conséquent adaptée à un travail sur machine et afin que cette texture n'évolue pas au cours du stockage.

La teneur exacte en maltitol ou en xylitol variera avec la nature du produit fabriqué mais aussi en fonction de la texture finale désirée. Cette dernière pourra être ajustée par le choix des autres ingrédients et par la teneur en eau de la confiserie.

De façon générale, les quantités nécessaires seront plus faibles dans le cas d'une pâte à mâcher que dans le cas d'un nougat dur.

Dans la pratique, on retiendra pour l'un ou l'autre de ces deux polyols une teneur totale en poids rapportée à la charge édulcorante de préférence comprise entre 55 % et 91 %, plus préférentiellement comprise entre 60 % et 85 % et mieux encore comprise entre 65 % et 80 %.

Il est également possible de combiner le maltitol et le xylitol ou d'ajouter un autre polyol cristallin afin de contrôler la cristallisation. Dans ce cas, la teneur en au moins le maltitol ou au moins le xylitol devra excéder 50 % en poids de la charge édulcorante pour qu'il y ait formation d'un grainage.

La teneur optimale en maltitol et en xylitol pourra aisément être déterminée par l'homme du métier, à partir des données ci-dessus, par quelques essais de routine. Il va de soi que l'ajustement de cette teneur se fera en prenant en considération le type d'installation industrielle à utiliser et le mode de fabrication des confiseries grainées qui pourront être aussi bien coulées, moulées, découpées qu'extrudées.

Selon l'invention, la charge édulcorante constitutive de la confiserie grainée, comportera outre le maltitol ou le xylitol, des sirops de polyols ou des sirops d'oligosaccharides ou de polysaccharides, de préférence hydrogénés.

Par sirops de polyols, on entend ici les sirops de mono et/ou de disaccharides hydrogénés et en particulier ceux de xylitol, de sorbitol et de maltitol. Par sirops d'oligosaccharides ou de polysaccharides, on désigne en particulier les hydrolysats d'amidon hydrogénés pauvres en sorbitol et en maltitol, l'inuline et ses dérivés, les dextrines et leurs dérivés et en particulier les hydrolysats de dextrines, et les produits communément désignés par la dénomination "polydextrose" et les polyglucoses.

La charge édulcorante sera minoritairement composée des sirops ci-dessus, seuls ou en mélanges, étant entendu que rien n'empêche, bien qu'alors le coût devienne un facteur limitant, d'utiliser les mêmes produits à l'état déshydraté ou à l'état cristallisé.

Pour maîtriser la cristallisation du maltitol ou du xylitol et obtenir des cristaux suffisamment fins, il sera préférable d'ajuster les teneurs en oligosaccharides et en polysaccharides au sein de la confiserie grainée conforme à l'invention. Il a été constaté que des teneurs représentant en sec environ 4 % à environ 35 % de la charge édulcorante totale de la confiserie considérée à l'état sec, et plus préférentiellement entre 5 % et 30 % de cette charge, facilitent de façon avantageuse la formation de nucléï et évitent leur évolution vers des cristaux de taille supérieure à 60 microns.

La charge édulcorante pourra comprendre en tant qu'éléments constitutifs mineurs, des agents viscosifiants comme la gomme arabique, des agents modificateurs de l'activité de l'eau comme la glycérine, ou encore des édulcorants intenses comme l'aspartame ou l'acésulfame.

Dans la pratique, cette charge édulcorante, considérée en sec, représentera de 60 à 96 %, de préférence de 70 à 90 % et plus préférentiellement de 75 à 88 % en poids de la confiserie telle que commercialisée.

Les confiseries grainées de l'invention, lorsqu'il s'agit en particulier de nougats, de pâtes à mâcher, de caramels et de guimauves grainées, comportent des agents de foisonnement afin de faciliter la création d'une structure comparable à celle d'une mousse. Ces agents sont des protéines d'origine animale ou végétale comme la gélatine, les protéines de lait, les protéines de poisson, les hydrolysats de gluten, les protéines de soja, l'albumine de blanc d'oeuf.

En ce qui concerne les gélatines, l'aptitude à donner des gels consistants, c'est à dire pour l'homme du métier le degré bloom, sera pris en compte dans les dosages. Ainsi, on préférera retenir des gélatines de très haut degré bloom lorsque l'on souhaitera limiter l'apport en protéines ou bien obtenir une texture élastique. Rien n'interdira également au contraire d'utiliser des protéines en tant que produits de charge, par exemple dans le cas de confiseries diététiques ou pharmaceutiques. On retiendra de préférence alors les gélatines de bas degré bloom, les protéines laitières et de blanc d'oeuf.

Ces agents de foisonnement représenteront de préférence 0,5 à 15 % de la confiserie telle que commercialisée.

Les pâtes à mâcher et les nougats comporteront également, comme il est d'usage pour les formulations classiques, de la matière grasse dans les proportions appropriées connues de l'homme du métier. En ce qui concerne sa nature, il s'agira de préférence d'une matière grasse laitière ou d'une huile végétale hydrogénée, de palme, de coprah ou encore de soja. Ces matières grasses, pour des raisons organoleptiques possèderont avantageusement un point de fusion sensiblement voisin de la température buccale, et seront de préférence employées à un taux compris entre 1 et 10 %.

L'emploi d'un émulsifiant sera facultatif, notamment lorsque des teneurs élevées en protéines seront présentes. Il n'empêche que lorsque de la matière grasse viendra à être utilisée en quantité non négligeable dans la formulation des confiseries selon l'invention, il sera toujours préférable de prévoir son addition à un taux de 0,1 à 2 % par rapport à la confiserie. Cet émulsifiant pourra être choisi en particulier parmi les lécithines, les esters gras de glycérol, de saccharose ou de sorbitol.

Les confiseries grainées conformes à l'invention présentent, de façon générale, une teneur en eau comprise entre 3 et 20 %, de préférence entre 4 et 14,5 % et plus préférentiellement entre 5 et 13 %. On retient des valeurs plutôt basses pour des pâtes à mâcher ou des nougats, et des valeurs plus élevées pour des fondants ou bien des guimauves grainées. Il est à noter que par rapport aux recettes classiques, les teneurs en eau sont en général choisies légèrement plus faibles.

Il est également possible d'envisager, compte tenu des pouvoirs sucrants elevés du maltitol et du xylitol, l'introduction de substances aux propriétés nutritionnelles ou pharmacologiques intéressantes comme des minéraux, des vitamines, des extraits de plantes, des principes actifs pharmaceutiques ou encore des acides gras essentiels.

Les confiseries grainées conformes à l'invention présentent avantageusement la caractéristique de pouvoir être préparées selon les procédés conventionnels déjà en place dans les industries de la confiserie. Ces procédés peuvent être des méthodes nécessitant une cuisson, ou bien des méthodes à froid à l'instar de celle décrite dans le brevet FR 2.338.651 mentionné plus haut ou de celles utilisées pour fabriquer des chewing-gums.

Il convient toutefois d'ajuster légèrement les conditions de fabrication de manière à ce que la teneur en eau finale des confiseries soit comprise entre 3 et 20 %.

De préférence, on procède à la solubilisation de maltitol cristallin ou de xylitol cristallin et à la cuisson à une température élevée d'au moins 75 % de la charge édulcorante comprenant sur sec de 50 à 93 % de maltitol ou de xylitol. La température de cuisson sera dans le cas du maltitol comprise entre 105 et 135°C et de préférence comprise entre 108 et 128°C. Dans le cas du xylitol, la température de cuisson à retenir sera plus élevée et comprise entre 110 et 150°C et plus préférentiellement entre 115 et 145°C. Il est également possible d'utiliser un sirop à très haute teneur en maltitol ou en xylitol au lieu d'employer ces polyols à l'état cristallin. La température exacte de cuisson variera selon le type d'évaporateur en place et notamment le niveau de vide appliqué mais aussi selon le type de confiserie à obtenir. On ajoute ensuite à la masse cuite refroidie au dessous de la température de cuisson les autres ingrédients susceptibles d'entrer dans la composition de la confiserie comme les arômes, les matières grasses, les agents viscosifiants, les agents acidulants et colorants, les émulsifiants, les agents de charge et les agents de foisonnement. Ces derniers peuvent être apportés sous forme de solutions de manière à faciliter leur incorporation.

Dans une variante du procédé, on peut également procéder à la cuisson du mélange édulcorant avec les ingrédients de la formulation non sensibles au traitement thermique.

La cristallisation en cristaux de taille inférieure à 60 microns nécessaire à l'obtention d'une texture courte pourra être spontanée. Un simple refroidissement de la masse cuite ou un simple transfert mécanique de celle-ci est susceptible en effet d'amorcer la cristallisation. Mais, de préférence, on provoque cette dernière par addition au mélange édulcorant cuit d'une poudre de maltitol ou de xylitol comprenant des cristaux, de préférence de forme parallélipipédique d'un diamètre inférieur de 60 microns, ou par l'addition d'un fondant comprenant l'un ou l'autre de ces deux polyols à l'état cristallisé essentiellement sous forme de cristaux de taille inférieure à 60 microns. Que ce soit dans le cas d'un apport d'une poudre ou d'un fondant, on préfère amorcer la cristallisation par des cristaux les plus purs possibles, c'est à dire de préférence de pureté dépassant 95 % et de préférence 98 % voire 99 %, et les plus fins possible, c'est à dire de préférence de taille inférieure à 40 microns et plus préférentiellement encore de taille inférieure à 20 microns. Cette addition pourra représenter de 0,1 à 25 % de la charge édulcorante de la confiserie. On amorce la cristallisation de préférence à une température inférieure à 105°C et plus préférentiellement comprise entre 40 et 70°C. Avec le maltitol, l'apparition de très fins cristaux a généralement lieu au dessous de 35°C.

On procède alors à un travail de la masse cuite dans le but de permettre la propagation de la cristallisation mais aussi éventuellement dans le but de l'aérer. On peut par exemple utiliser un batteur à pression d'air ou une étireuse. On veille alors à réaliser ce travail sur machine à une température adéquate de sorte que la viscosité de la masse soit correcte. Cette opération est conduite de manière à obtenir une confiserie présentant une densité par rapport à l'eau comprise entre 0,4 et 1,8 et de préférence entre 0,6 et 1,5. Dans le cas d'un marshmallow grainé, cette valeur est plutôt comprise entre 0,4 et 0,8 alors que pour un caramel fudgé, un nougat ou une pâte à mâcher, celle-ci varie de 0,8 à 1,40 et approche en général 1,05. Il est à noter que cette densité devra être légérement plus basse que celle d'une confiserie classique pour obtenir le résultat recherché.

Enfin, la masse résultante, éventuellement refroidie et maturée, est mise en forme par exemple par coulage dans l'amidon ou encore, par extrusion ou moulage suivi d'une découpe. Les articles refroidis sont ensuite emballés.

Selon un second mode de fabrication, qualifié de procédé à froid, on procède au simple mélange intime dans les proportions correctes et à une température comprise entre 45° et 90°C, d'une part d'une poudre ou d'un fondant renfermant des cristaux de xylitol ou de maltitol possédant les caractéristiques énoncées ci-dessus et d'autre part de la charge édulcorante complémentaire apportée sous forme d'un sirop concentré. La granulométrie de la poudre est également choisie la plus fine possible de façon à ce que la confiserie ne présente pas une texture sableuse en bouche. La matière sèche du sirop édulcorant concentré complémentaire dépasse de préférence 85 % et mieux encore 90 %. On ajoute également les autres ingrédients éventuels de la confiserie. Dans ce cas, les agents de foisonnement sont également introduits sous forme d'un sirop.

L'étape d'aération, si elle est nécessaire, et l'étape de mise en forme selon ce procédé à froid se réalisent tel que décrit ci-dessus.

Les fondants grainés conformes à l'invention peuvent être utilisés à la manière des fondants traditionnels à base de saccharose pour, par exemple, fourrer ou garnir des chewing-gums, des chocolats, des confiseries ou des produits de biscuiterie. Ils peuvent aussi constituer des produits de confiserie en tant que tels, par exemple lorsqu'ils sont coulés en moules ou dans l'amidon. Ils peuvent sans inconvénient être dragéifiés, candis, sucrés ou givrés, par emploi de sirops ou de poudres de xylitol, de maltitol ou d'autres polyols.

Il a été constaté de façon surprenante, notamment dans le cas d'une formulation avec du maltitol, que les fondants conformes à l'invention peuvent aisément être retravaillés ou recuits pour ajuster leur texture ou leur goût. C'est ainsi que l'on peut en particulier par chauffage sous vide à une température comprise entre 40 et 75°C environ, soit concentrer ces fondants sans risque de voir disparaître totalement leur phase cristalline, soit affiner davantage la taille des cristaux qu'ils contiennent. On peut naturellement mettre à profit cet avantage de différentes manières, par exemple pour préparer, sans avoir recours à un canon à fondant, des fondants très crémeux.

Par ailleurs, les fondants grainés de l'invention, comme d'ailleurs les autres confiseries grainées, lorsqu'ils sont formulés avec du xylitol, présentent la propriété de générer une grande fraîcheur en bouche. Cette propriété particulière, qui les distingue des fondants traditionnels, peut particulièrement bien s'accommoder avec certaines formulations de confiserie de chocolat, de chewing-gums ou de biscuits. Lorsque l'on cherche au contraire à éviter cette caractéristique de fraîcheur, on préfèrera préparer des confiseries grainées à base de maltitol au lieu de xylitol, ou encore à base de mélanges de maltitol et de xylitol.

L'invention sera mieux comprise à l'aide des exemples qui suivent.

### EXEMPLE 1 : Préparation de fondants au maltitol.

On prépare plusieurs fondants au maltitol selon la formulation ci-dessous afin de déterminer les caractéristiques idéales de l'amorce de cristallisation ainsi que les températures de cuisson idoines. Le maltitol constitue environ 70 % de la charge édulcorante totale considérée à l'état sec, de la formulation.

| | |
|---|---|
| - Poudre de maltitol MALTISORB^{R} P90 : (99,8 % de pureté) | 52,6 % |
| - Sirop de sorbitol NEOSORB^{R}70/70 : | 32,2 % |
| - Eau | 14,4 % |
| - Amorce de cristallisation (poudre de maltitol) | 0,75 % |

Pour cela on suit le mode opératoire suivant :
- Cuisson du mélange MALTISORB^{R} P90, NEOSORB^{R} 70/70 et eau à la température choisie.
- Battage du mélange cuit à l'aide d'un mélangeur planétaire jusqu'à ce que la température de la masse cuite atteigne 47°C.
- Addition de l'amorce de cristallisation
- Battage complémentaire à l'aide du mélangeur planétaire pendant 15 minutes.

On choisit les températures de cuisson suivantes :
105°C - 110°C - 115°C - 120°C - 125°C
et les amorces de cristallisation suivantes :

### - MALTISORB^{R}P90 : (Société ROQUETTE) :

Au microscope en lumière polarisée on constate que cette poudre contient des cristaux de maltitol, sous forme d'aiguilles d'environ 120 microns de longueur et d'environ 35 microns de section.

### - MALTISORB^{R}P90 finement broyé :

Cette poudre contient essentiellement des cristaux parallélépipédiques d'environ 47 microns de longueur et d'environ 23 microns de section.

### - MALTISORB^{R}P200 : (Société ROQUETTE) :

Cette poudre est essentiellement constituée de cristaux en aiguilles d'environ 350 microns de longueur et de 82 microns environ de section.

### - AMALTY^{R}MR100 (Société TOWA) :

Au microscope cette poudre de maltitol, contrairement aux précédentes, ne polarise pas la lumière, ce qui dénote un plus faible état de cristallisation. Elle est constituée essentiellement de particules parallélipipédiques, plutôt cubiques d'arêtes de 10 microns environ.

### - Poudre de maltitol obtenue selon les conditions de l'exemple 2 du brevet FR 2.499 576 :

On reproduit pour cela exactement les conditions du procédé décrit dans l'exemple 2 dudit brevet, consistant à faire cristalliser le maltitol d'un sirop présentant une matière séche de 80 %, une teneur en maltitol sur sec voisine de 92 %, une teneur en sorbitol sur sec voisine de 1 %, et une teneur en maltotriitol sur sec voisine de 4,6 %. On ajoute au sirop 1 % de cristaux anhydres de maltitol en poudre en tant que germes cristallins et on laisse refroidir progressivement le sirop de 50°C à 20°C en trois jours en agitant. Après lavage, les cristaux sont observés au microscope en lumière polarisée. On constate que la poudre ainsi obtenue polarise faiblement la lumière et est constituée essentiellement de gros cristaux parallélipipédiques, plutôt cubiques, d'arêtes de 100 microns environ pour les plus petits cristaux. La taille importante des cristaux semble liée à l'excessive lenteur de cristallisation selon ce procédé.

On obtient les résultats suivants :

### - concernant les températures de cuisson :

Quelles que soient les amorces de cristallisation utilisées, les fondants obtenus par cuisson à 105°C sont mous, alors que ceux obtenus à 125°C sont particulièrement durs. Ainsi les premiers conviennent en tant que fourrage alors que les seconds pourraient constituer des produits à dragéifier.

Pour des températures intermédiaires, on obtient des textures crémeuses, l'idéal étant pour la formulation retenue de choisir une température voisine de 110°C.

### - concernant les amorces de cristallisation :

On observe toutefois déjà en cours et en fin de fabrication des différences notables entre les produits préparés.

Pour une même température de cuisson, les produits préparés avec les amorces de cristallisation MALTISORB^{R} P90, MALTISORB^{R} P200 et poudre de maltitol selon le brevet FR 2.499.576 sont de texture plus ferme que les fondants obtenus avec les amorces de cristallisation MALTISORB^{R} P90 broyé et AMALTY^{R} MR100.

Au cours du stockage, à température et à humidité ambiantes, les différences observées entre les produits s'accentuent.

Après une semaine, les produits fabriqués avec les amorces MALTISORB^{R} P90 et P200 ainsi que la poudre de maltitol selon le brevet FR 2.499.576 sont particulièrement durs, cassants et sableux en bouche.

Au contraire, les produits préparés avec les amorces MALTISORB^{R} P90 broyé et AMALTY^{R} MR100 se sont légèrement affermis mais ont toujours une texture idéale, paraissant lisse et homogène en bouche.

Quatre mois plus tard, les deux derniers fondants sont dégustés à nouveau. Ils sont restés souples et d'excellente qualité. Ils comportent, pour ceux préparés par cuisson à 110°C, une teneur en eau voisine de 13,5 %. Ces fondants, étant eux-mêmes des confiseries grainées, peuvent être utilisés dans la préparation d'autres types de confiseries, conformes à l'invention.

### EXEMPLE 2 : Observation de fondants au maltitol.

On observe au microscope en lumière polarisée et à un grossissement de 548 fois, les trois fondants suivants préparés par cuisson à 110°C selon la formulation de l'exemple 1 et stockés pendant 5 mois à température ambiante dans un récipient fermé en verre :
- un fondant avec amorce AMALTY^{R} MR100
- un fondant avec amorce MALTISORB^{R} P90 broyé
- un fondant avec amorce MALTISORB^{R} P90

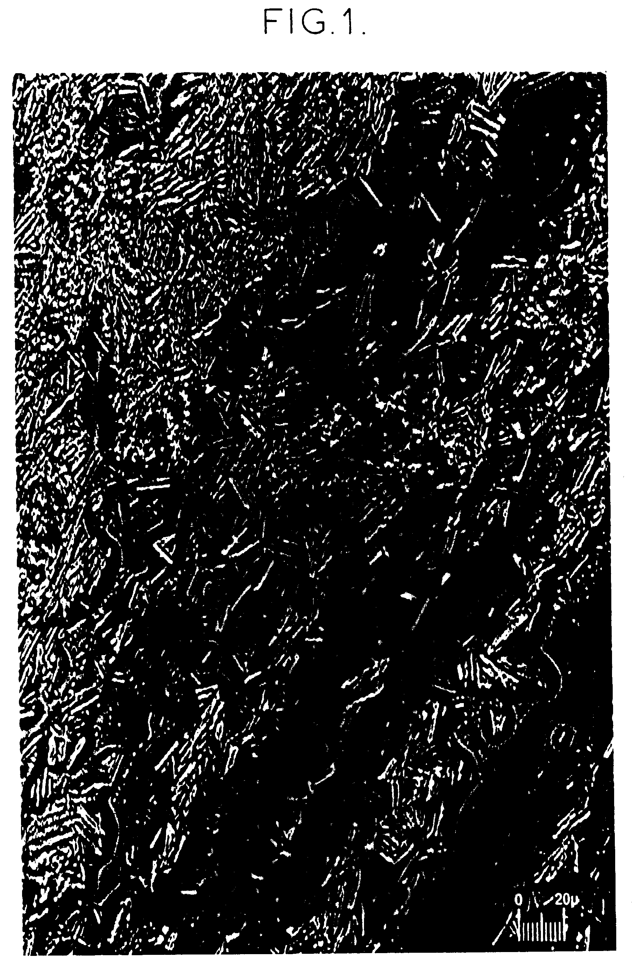

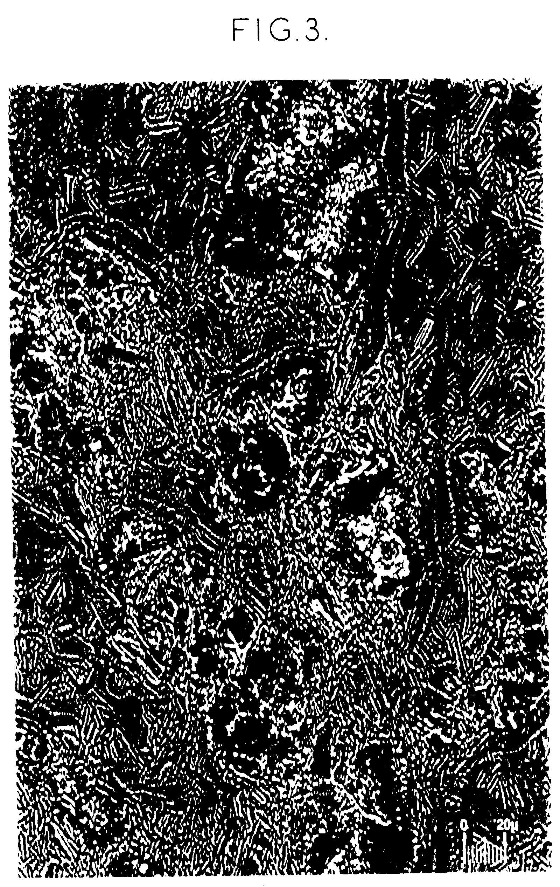

Des photos sont prises pour les trois produits. Elles sont appelées respectivement Figure n° 1, Figure n° 2 et Figure n° 3.

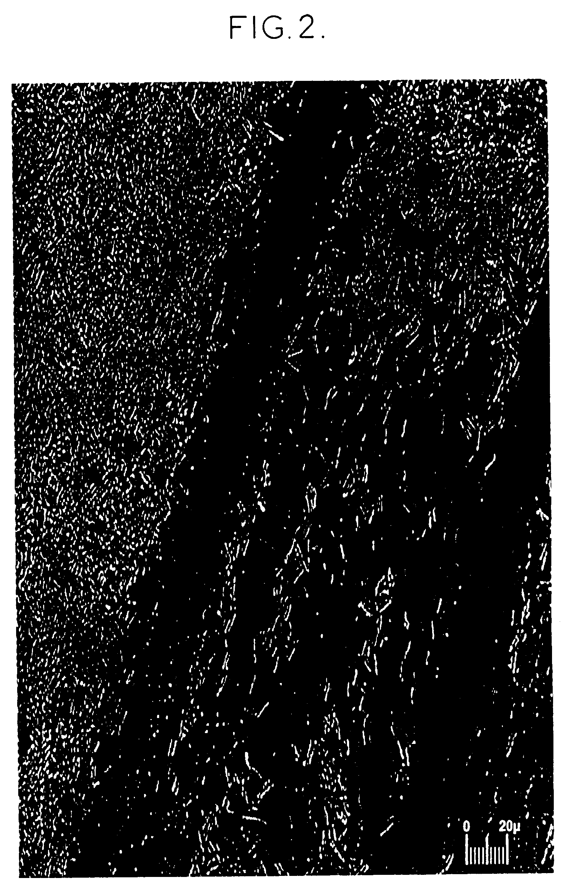

Les deux fondants jugés très stables et préparés par emploi d'AMALTY^{R} MR100 et MALTISORB^{R} P90 broyé contiennent des cristaux extrêmement fins, de taille inférieure à 20 microns. Le produit avec AMALTY^{R} MR100 contient des particules cristallines de taille comprise entre 3 et 20 microns (Figure n° 1). Celui avec MALTISORB^{R} P90 broyé contient des cristaux encore plus fins de taille comprise entre 3 et 12 microns (Figure n° 2).

Par contre le fondant instable au stockage et sableux en bouche, dont la cristallisation a été amorcée par emploi de MALTISORB^{R} P90, présente de très gros cristaux mais également de très fins cristaux (Figure n° 3). Les plus gros cristaux atteignent une taille de 80 microns voire 100 microns.

### EXEMPLE 3 : Observation d'un fondant de l'art antérieur au maltitol.

On observe au microscope en lumière polarisée et à un grossissement de 548 fois un produit obtenu en reproduisant rigoureusement les conditions de fabrication décrites à l'exemple 5 du brevet FR 2.499.576. Le maltitol constitue environ 77,5 % de la charge édulcorante considérée à l'état sec, de cette formulation.

On obtient un produit de texture filante et particulièrement collant. Lors de sa consommation, il apparait sableux et incorrect et ne possède pas par conséquent les caractéristiques recherchées.

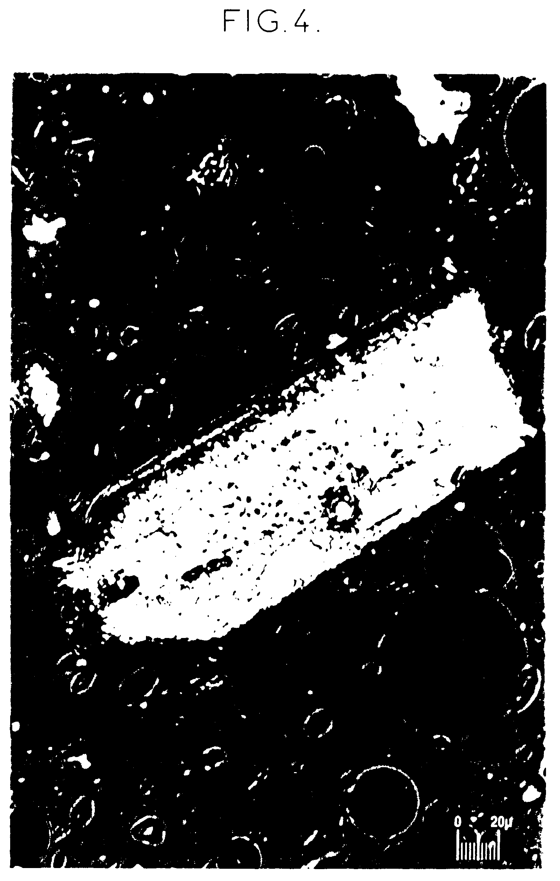

On constate sur la Figure n° 4 que le produit contient des particules cristallines dont la taille pour certaines d'entre elles dépasse 230 microns. Il contient également de nombreuses bulles d'air (cercles pleins noirs sur la Figure n° 4).

### EXEMPLE 4 : Pâtes à mâcher avec maltitol ou xylitol.

On compare la qualité organoleptique et la stabilité des trois formulations de pâtes à mâcher préparées à l'aide des six polyols cristallins de haute pureté suivants : sorbitol, isomalt, mannitol, érythritol, xylitol et maltitol.

### Formule A

| | |
|---|---|
| Sirop de sorbitol NEOSORB® 70/70 (MS : 70 %) | 6 400 g |
| Polyol cristallin | 1 800 g |
| Protéines de lait délactosées | 1 120 g |
| Coprah hydrogéné (point de fusion 32°C) | 395 g |
| Monostéarate de glycérol | 39 g |
| Solution de gélatine 180 Blooms (MS : 40 %) | 196 g |
| Polyol cristallin finement broyé en amorce (diamètre des particules < 50 microns) | 50 g |

Le taux de polyol cristallin par rapport à la charge édulcorante, exprimé en sec/sec, est de 29 % environ.

### Formule B

La formulation est identique à la formule A en dehors du fait que :
- le sirop de sorbitol NEOSORB® 70/70 est ajouté à raison de 4 702 g au lieu de 6 400 g.
- et le polyol cristallin est ajouté à raison de 2 988 g au lieu de 1 800 g.

Le taux de polyol cristallin par rapport à la charge édulcorante exprimé en sec/sec, est de 48 % environ.

### Formule C

La formulation est là encore identique à celle de la formule A donnée ci-avant en dehors du fait que :
- le sirop NEOSORB® 70/70 n'est introduit qu'à raison de 2 713 g,
- et le polyol cristallin est ajouté à raison de 4 381 g.

Le taux de polyol cristallin par rapport à la charge édulcorante, exprimé en sec/sec, est proche de 70 %.

Pour préparer les pâtes à mâcher, on procède pour les formules A, B et C :
- à la cuisson du mélange NEOSORB® 70/70 et du polyol cristallin à environ 120°C lorsqu'il s'agit d'un disaccharide (isomalt, maltitol) et à environ 140°C lorsqu'il s'agit d'un monosaccharide (sorbitol, mannitol, érythritol et xylitol),
- à l'incorporation, lors du refroidissement du mélange cuit, des protéines de lait vers 100°C environ, de la matière grasse et de l'émulsifiant vers 90°C, de la solution de gélatine vers 85°C et enfin de la poudre de polyol en tant qu'amorce de cristallisation vers 80°C,
- à l'étirage de la pâte résultante pendant une minute de façon à obtenir une densité proche de 1,04,
- et au formage et à la découpe de la pâte et enfin à l'emballage des produits sous papillotes.

La teneur en eau des produits est dans tous les cas proche de 6,5 %.

Les pâtes à mâcher obtenues avec les différents polyols (18 au total) sont stockées pendant deux mois dans des conditions ambiantes de température et d'humidité.

A ce terme, les produits sont comparés entre eux. On note en particulier la tendance au collage au papier et la texture du produit.

Les produits préparés selon la formule A restent non collants et présentent une texture courte seulement lorque l'érythritol ou le mannitol sont employés. Avec le xylitol, le maltitol et le sorbitol, les produits sont franchement collants dès la fabrication.

Avec la formule B, les pâtes à mâcher avec isomalt et avec mannitol sont correctes après fabrication mais tendent rapidement à prendre en masse et à devenir sableuses. Les produits avec xylitol et maltitol sont assez collants et présentent une texture plutôt filante. Lorsqu'on observe ces derniers au microscope, on constate qu'ils sont insuffisamment cristallisés.

Avec la formule C, les pâtes à mâcher avec sorbitol, mannitol, érythritol et isomalt cristallisent très rapidement à coeur et deviennent de ce fait inconsommables. En revanche, les pâtes à mâcher avec xylitol et maltitol ont une texture parfaite, très crémeuse, laquelle est conservée au cours du temps.

A la dégustation, il apparaît que, parmi les quelques produits ayant conservé une texture correcte après deux mois de stockage, les produits selon la formulation C avec xylitol et maltitol sont jugés les meilleurs en goût.

### Exemple 5 : Pâtes à mâcher au xylitol.

On prépare en suivant le mode opératoire donné à l'exemple 4 une autre formulation de pâte à mâcher à base de xylitol. Celle-ci comprend avant cuisson :

| | |
|---|---|
| Xylitol XYLISORB® | 4 320 g |
| Sirop de maltitol LYCASIN® | 4 370 g |
| Gélatine (solution à 26% de MS) | 40 g |
| Coprah (point de fusion 32°C) | 60 g |
| Monostéarate de glycérol | 10 g |
| Xylitol XYLISORB® (pureté 99 %) très finement broyé (taille inférieure à 20 microns) | 40 g |

Après cuisson, la teneur en eau de cette pâte à mâcher est voisine de 5,2 %. Sa teneur en xylitol par rapport à la charge édulcorante totale, exprimée en sec/sec, est voisine de 58 %.

On déguste cette pâte à mâcher dès fabrication. Elle présente une texture très courte, non collante, caractéristique d'une pâte à mâcher traditionnelle de qualité. De plus, elle est très sucrée, présente une fraîcheur en bouche très élevée et est très crémeuse en bouche.

On observe au microscope ce produit. Il présente une structure microcristallisée. On constate qu'il est composé de très nombreux cristaux baignant dans un sirop. Ces cristaux se présentent sous forme de particules très fines de longueur au plus égale à 15 microns et de diamètre inférieur à 5 microns. La qualité exceptionnelle de cette pâte à mâcher, qui peut être fabriquée en continu, peut être reproduite aisément comme l'a constaté la demanderesse, si la teneur en oligo et polysaccharides de la pâte est comprise entre 4 et 35 % par rapport à la charge édulcorante, exprimée en sec/sec.

## Revendications

1. Confiserie grainée comportant du maltitol ou du xylitol, caractérisée en ce que le maltitol ou le xylitol constituent de 50 à 93 % en poids de la charge édulcorante qu'elle comporte et en ce que le maltitol ou le xylitol présents à l'état cristallisé au sein de la confiserie le sont sous forme de cristaux de taille inférieure à 60 microns, de préférence inférieure à 40 microns et plus préférentiellement inférieure à 20 microns.

2. Confiserie selon la revendication 1 caractérisée en ce que le maltitol ou le xylitol constituent de 55 à 91 %, de préférence de 60 à 85 % et plus préférentiellement de 65 à 80 % de la charge édulcorante qu'elle comporte.

3. Confiserie selon l'une des revendications 1 ou 2 caractérisée en ce que la charge édulcorante qu'elle comporte représente de 60 à 96 % en poids, de préférence de 70 à 90 %, et plus préférentiellement encore de 75 à 88 % de la confiserie.

4. Confiserie selon l'une des revendications 1 à 3 caractérisée en ce que sa densité par rapport à l'eau est comprise entre 0,4 et 1,8, de préférence entre 0,6 et 1,5.

5. Confiserie selon l'une quelconque des revendications 1 à 4 caractérisée en ce qu'elle contient une matière grasse et un émulsifiant, respectivement à raison de 1 à 10 % et de 0,1 à 2 %.

6. Confiserie selon l'une quelconque des revendications 1 à 5 caractérisée en ce que sa teneur en eau est comprise entre 3 % et 20 %, de préférence entre 4 et 14,5 % et plus préférentiellement encore entre 5 et 13 %.

7. Confiserie selon l'une quelconque des revendications 1 à 6 caractérisée en ce que la charge édulcorante est constituée, en dehors du maltitol ou du xylitol, d'au moins un produit choisi parmi les sirops de polyols et les sirops d'oligosaccharides et de polysaccharides, éventuellement associé à un édulcorant intense, un agent viscosifiant ou un modificateur de l'activité de l'eau.

8. Confiserie grainée selon l'une quelconque des revendications 1 à 7 caractérisée en ce que sa teneur en oligosaccharides et en polysaccharides représente en sec, environ 4 % à environ 35 %, et plus préférentiellement de 5 % à 30 % de la charge édulcorante totale de la confiserie considérée à l'état sec.

9. Procédé de fabrication d'une confiserie selon l'une quelconque des revendications 1 à 8 caractérisé en ce que :
- on procède à la cuisson, à une température élevée, d'au moins 75 % de la charge édulcorante comprenant le maltitol ou le xylitol à l'état solubilisé,
- on ajoute à la masse cuite de 0,1 à 25 % d'une poudre ou d'un fondant comprenant du maltitol ou du xylitol cristallisés sous forme de cristaux de taille inférieure à 60 microns,
- on procède à un travail de la masse résultante afin de permettre la propagation de la cristallisation, et afin éventuellement de l'aérer, avant de la mettre en forme et d'emballer la confiserie ainsi obtenue.

10. Procédé de fabrication d'une confiserie selon l'une quelconque des revendications 1 à 8, caractérisé en ce que :
- on mélange intimement dans des proportions adéquates et à une température comprise entre 45°C et 90°C, d'une part une poudre ou un fondant renfermant des cristaux de xylitol ou de maltitol de taille inférieure à 60 microns et d'autre part une charge édulcorante complémentaire sous forme d'un sirop concentré,
- on procède à un travail de la masse résultante afin de permettre la propagation de la cristallisation du maltitol, et afin éventuellement de l'aérer, avant de la mettre en forme et d'emballer la confiserie obtenue.

## Claims

1. Grainy confectionery product, containing maltitol or xylitol, characterized in that the maltitol or xylitol constitute from 50 to 93% by weight of the sweetening component which said confectionery product contains and in that the maltitol or the xylitol present in the crystallized state in the said confectionery product are in the form of crystals with a size of less than 60 microns, preferably of less than 40 microns and more preferably of less than 20 microns.

2. Confectionery product according to Claim 1, characterized in that the maltitol or xylitol constitute 55 to 91%, preferably 60 to 85% and more preferably 65 to 80% of the sweetening component which said confectionery product contains.

3. Confectionery product according to either of Claims 1 and 2, characterized in that the sweetening component which said confectionery product contains represents 60 to 96% by weight, preferably 70 to 90%, and still more preferably 75 to 88% of said confectionery product.

4. Confectionery product according to Claims 1 to 3, characterized in that its density relative to water is between 0.4 and 1.8, preferably between 0.6 and 1.5.

5. Confectionery product according to any one of Claims 1 to 4, characterized in that it contains a fat and an emulsifier, to the extent of 1 to 10% and 0.1 to 2% respectively.

6. Confectionery product according to any one of Claims 1 to 5, characterized in that its water content is between 3 and 20%, preferably between 4 and 14.5% and still more preferably between 5 and 13%.

7. Confectionery product according to any one of Claims 1 to 6, characterized in that the sweetening component consists, apart from maltitol or xylitol, of at least one product chosen from polyol syrups and oligosaccharide and polysaccharide syrups, optionally combined with an intense sweetener, a viscosity enhancer or a water-activity modifying agent.

8. Grainy confectionery product according to any one of Claims 1 to 7, characterized in that its oligosaccharide and polysaccharide content represents, on a dry basis, about 4% to about 35%, and more preferably 5% to 30% of the total sweetening component of the confectionery product considered in the dry state.

9. Process for the manufacture of a confectionery product according to any one of Claims 1 to 8, characterized in that:
- at least 75% of the sweetening component comprising maltitol or xylitol in the solubilized state is cooked at a high temperature,
- 0.1 to 25% of a powder or of a fondant comprising maltitol or xylitol crystallized in the form of crystals with a size of less than 60 microns is added to the cooked mass,
- the resulting mass is worked so as to allow propagation of the crystallization and optionally so as to aerate it, before shaping it and wrapping the confectionery product thus obtained.

10. Process for the manufacture of a confectionery product according to any one of Claims 1 to 8, characterized in that:
- there are intimately mixed in suitable proportions and at a temperature of between 45 C and 90 C, on the one hand, a powder or a fondant containing xylitol or maltitol crystals with a size of less than 60 microns and, on the other hand, an additional sweetening component in the form of a concentrated syrup,
- the resulting mass is worked so as to allow propagation of the crystallization of the maltitol, and optionally so as to aerate it, before shaping it and wrapping the confectionery product obtained.

## Patentansprüche

1. Feinkörnige Süßwarenmasse, die Maltit oder Xylit umfaßt, dadurch gekennzeichnet, daß der Maltit oder das Xylit 50 bis 93 Gew.-% des Süßstoffs, den sie enthält, bilden und dadurch, daß der Maltit oder das Xylit im Inneren der Süßwarenmasse in kristallisiertem Zustand in Form von Kristallen mit einer Größe kleiner als 60 Mikrometer, vorzugsweise kleiner als 40 Mikrometer und stärker bevorzugt kleiner als 20 Mikrometer vorliegen.

2. Süßwarenmasse gemäß Anspruch 1, dadurch gekennzeichnet, daß der Maltit oder das Xylit 55 bis 91%, vorzugsweise 60 bis 85% und stärker bevorzugt 65 bis 80% des Süßstoffs, den sie umfaßt, bilden.

3. Süßwarenmasse gemäß einem der Ansprüche 1 oder 2, dadurch gekennzeichnet, daß der Süßstoff, den sie enthält, 60 bis 96 Gew.-%` vorzugsweise 70 bis 90 Gew.-% und noch stärker bevorzugt 75 bis 88 Gew.-% der Süßwarenmasse darstellt.

4. Süßwarenmasse gemäß einem der Ansprüche 1 bis 3, dadurch gekennzeichnet, daß ihre Dichte, bezogen auf Wasser, zwischen 0,4 und 1,8, vorzugsweise zwischen 0,6 und 1,5 liegt.

5. Süßwarenmasse gemäß einem der Ansprüche 1 bis 4, dadurch gekennzeichnet, daß sie ein Fett und ein Emulgierungsmittel in einer Menge von 1 bis 10% beziehungsweise von 0,1 bis 2% enthält.

6. Süßwarenmasse gemäß einem der Ansprüche 1 bis 5, dadurch gekennzeichnet, daß ihr Gehalt an Wasser zwischen 3% und 20%, vorzugsweise zwischen 4 und 14,5% und noch stärker bevorzugt zwischen 5 und 13% liegt.

7. Süßwarenmasse gemaß einem der Ansprüche 1 bis 6, dadurch gekennzeichnet, daß der Süßstoff, außer dem Maltit oder dem Xylit, aus wenigstens einem Produkt, das unter den Polyolsirupen und den Oligosaccharid- und Polysaccharidsirupen ausgewählt ist, gegebenenfalls in Verbindung mit einem intensiven Süßstoff, einem viskositätserhöhenden Mittel oder einem Modifizierungsmittel für die Aktivität des Wassers besteht.

8. Feinkörnige Süßwarenmasse gemäß einem der Ansprüche 1 bis 7, dadurch gekennzeichnet, daß ihr Gehalt an Oligosacchariden und Polysacchariden in der Trockne etwa 4% bis etwa 35% und stärker bevorzugt 5% bis 30% des gesamten in trockenem Zustand betrachteten Süßstoffs der Süßwarenmasse darstellt.

9. Verfahren zur Herstellung einer Süßwarenmasse gemäß einem der Ansprüche 1 bis 8, dadurch gekennzeichnet, daß:
- man das Kochen, bei einer hohen Temperatur, von wenigstens 75% des Süßstoffs, der den Maltit oder das Xylit in gelöstem Zustand enthält, ausführt,
- man der gekochten Masse 0,1 bis 25% eines Pulvers oder einer Fondantmasse, die in Form von Kristallen mit einer Größe kleiner als 60 Mikrometern kristallisierten Maltit oder Xylit umfassen, hinzufügt,
- man eine Bearbeitung der resultierenden Masse vornimmt, um die Fortpflanzung der Kristallisation zu ermöglichen und um sie gegebenenfalls zu belüften, bevor sie geformt wird und die so erhaltene Süßwarenmasse verpackt wird.

10. Verfahren zur Herstellung einer Süßwarenmasse gemäß einem der Ansprüche 1 bis 8, dadurch gekennzeichnet, daß:
- man einerseits ein Pulver oder eine Fondantmasse, die Xylit- oder Maltitkristalle mit einer Größe kleiner als 60 Mikrometern enthalten, und andererseits einen zusätzlichen Süßstoff in Form eines konzentrierten Sirups in geeigneten Verhältnissen und bei einer Temperatur zwischen 45 °C und 90 °C innig mischt,
- man eine Bearbeitung der resultierenden Masse vornimmt, um die Fortpflanzung der Kristallisation des Maltits zu ermöglichen und um sie gegebenenfalls zu belüften, bevor die erhaltene Süßwarenmasse verpackt wird.
